## Europäisches Patentamt

## European Patent Office

## Office européen des brevets

(11) Publication number: **0 036 317**
**B1**

(12)

# EUROPEAN PATENT SPECIFICATION

(45) Date of publication of patent specification: **10.08.88**

(51) Int. Cl.⁴: **B 62 M 9/12**

(21) Application number: **81301077.4**

(22) Date of filing: **16.03.81**

(54) Cycle derailleur.

(30) Priority: **15.03.80 JP 33684/80**
**19.09.80 JP 134347/80 u**
**19.09.80 JP 134348/80 u**
**19.09.80 JP 134349/80 u**

(43) Date of publication of application:
**23.09.81 Bulletin 81/38**

(45) Publication of the grant of the patent:
**10.08.88 Bulletin 88/32**

(84) Designated Contracting States:
**BE DE FR GB IT**

(56) References cited:
**EP-A-0 013 136**
**FR-A-2 418 143**
**FR-A-2 423 390**
**FR-A-2 463 045**
**FR-A-2 488 667**

(73) Proprietor: **SHIMANO INDUSTRIAL COMPANY LIMITED**
**77, 3-cho Oimatsu-cho Sakai-shi**
**Osaka (JP)**

(72) Inventor: **Shimano, Keizo**
**81, 3-cho, Midorigaoka-Minamimachi**
**Sakai-shi Osaka (JP)**

(74) Representative: **Szczuka, Jan Tymoteusz et al**
**Cruikshank & Fairweather 19 Royal Exchange Square**
**Glasgow G1 3AE Scotland (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a derailleur for use with a multi-stage sprocket assembly of a cycle, said derailleur comprising; a fixing member and a derailleur body having a parallelogram linkage comprising a support member, a pair of link members each pivotally connected at one end to said support member and at its other end to a movable member, said movable member mounting a chain shift means, and said derailleur body including a return spring arranged for biasing said movable member unidirectionally relative to said support member, said derailleur body being pivotally mounted on said fixing member via said support member, said chain shift means of said derailleur body being pivotally movable relative to said movable member, said movable member and chain shift means having a tension spring disposed for acting therebetween and biasing said derailleur body counterclockwise relative to said fixing member, one of the members of the derailleur body which member is movable relative to the support member being provided with a control wire fixing means for securing a control wire thereto, in use of the derailleur, so that displacement thereof will transform the parallelogram linkage against the biasing force of said return spring and swing said derailleur body relative to said fixing member against the biasing force of said tension spring, and wherein is provided a step-wise feed means.

With this type of derailleur, the derailleur body is swung relative to the fixing member by a residual biasing force consequent upon the chain tension being changed by the transformation of the parallelogram linkage.

Thus, the chain shift means moves with the derailleur body which swings relative to the fixing member after transformation of the parallelogram linkage. Hence, when the drive chain is switched, the chain shift means tends to push it against the lateral side of an adjacent larger diameter sprocket about to be engaged by the drive chain when changing from a higher speed to a lower speed. This results in the sprocket, chain and chain shift means all being subjected to considerable lateral pressures which in turn results in a rather heavy operation of the control wire, as well as the problems of noisy gear changing and excessive wear of the chain and sprockets.

French patent specification FR—A—2418143 relates to a derailleur arrangement in which a feed means is operable by a wire to transform the derailleur body according to changes of speed of different sprockets of the multi-sprocket assembly, i.e. changing from one speed to another, corresponding to shifting of the drive chain from a higher speed sprocket to a lower speed one. This is achieved by first moving a movable member axially of the sprocket assembly, then causing the chain shift and derailleur body to be rotated.

It is an object of the present invention to avoid or minimize one or more of the problems of the derailleurs according to the prior art.

The present invention provides a derailleur for use with a multi-stage sprocket assembly of a cycle as described in the opening paragraph, characterised in that there is provided a step-wise feed means disposed for acting between said fixing member and said derailleur body, said feed means being operable, in use, by said wire to swing said derailleur body step-wise in correspondence with speed changes between different sprockets of said multi-stage sprocket assembly, relative to said fixing member and to subsequently transform said derailleur body, when changing from one speed to another corresponding to shifting of the drive chain from a higher speed sprocket to a lower speed sprocket of the multi-stage sprocket assembly in use of the derailleur, and in that the step-wise feed mechanism comprises a plurality of first engagement portions whose number corresponds to or exceeds the number of desired speed change stages to be provided by the derailleur in use thereof with said multi-stage sprocket assembly; and a positioning means which has at least one second engagement portion engageable with one of said first engagement portions for locating said derailleur body in a predetermined postion relative to said fixing member; said first engagement portions extending along the swinging direction of said deraileur body relative to said fixing member and being laterally displaced relative to each other in the same direction as displacment of said chain shift means caused by transformation of the parallelogram linkage of said derailleur body.

The first engagement portions are preferably provided on the fixing member, and the positioning means formed integrally with one link member, or separately therefrom, being connected thereto so as to permit change of its position relative thereto.

In a derailleur of the present invention, the derailleur body, when operated by a control wire, at first swings relative to the fixing member and the parallelogram linkage is then transformed to move the chain shift means axially of the multistage sprockets, when changing from a higher speed to a lower speed, so that the drive shaft chain is guided by the chain shift means along a longer path at a greater separation from the sprocket about to be engaged. This results in a much freer movement of the chain and chain shift means so that the control wire is lighter in operation, requiring less effort to be applied to the control lever. In addition an optimum separation is maintained between the sprocket and the chain guided by the chain shift means thus improving speed change efficiency in cooperation with the motion of the chain and avoiding heavy contact between the chain and lateral sides of the sprockets. This in turn results in less noisy gear changing and the avoidance of excessive wear in the chain and sprockets.

Further preferred features and advantages of the invention will appear from the following description given by way of example of some preferred embodiments illustrated with reference to the accompanying drawings in which:

Figs. 1 to 7 show a first derailleur of the invention.

Fig. 1 being a front view of the derailleur,

Figs. 2 to 4 being bottom views illustrating different operating conditions of the derailleur,

Fig. 5 being a front view corresponding to Fig. 1 but with the derailleur in the operating condition illustrated in Fig. 4,

Fig. 6 being a front view of the fixing member, alone, of the derailleur, and

Fig. 7 a bottom view of the linkage member, alone, of the derailleur;

Figs. 8 to 15 show a second derailleur of the invention,

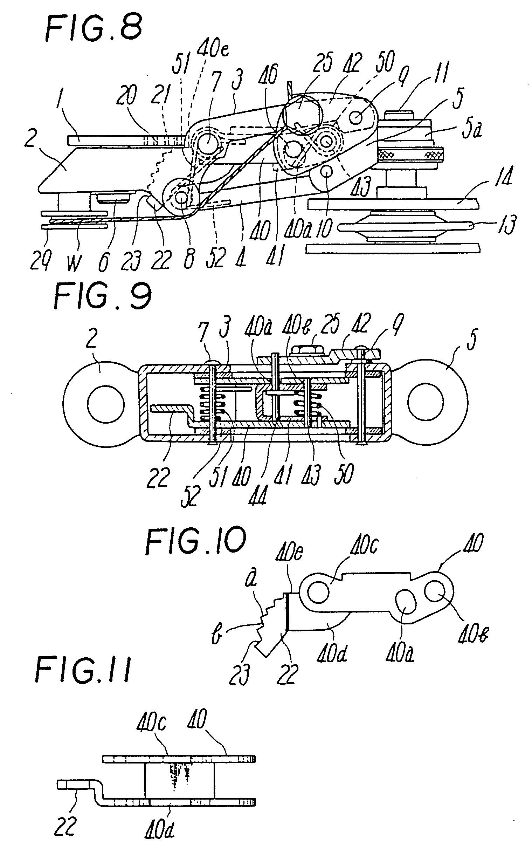

Fig. 8 being a bottom view of the second derailleur,

Fig. 9 a sectional view at right angles to the transformation plane of the parallelogram linkage of the second derailleur,

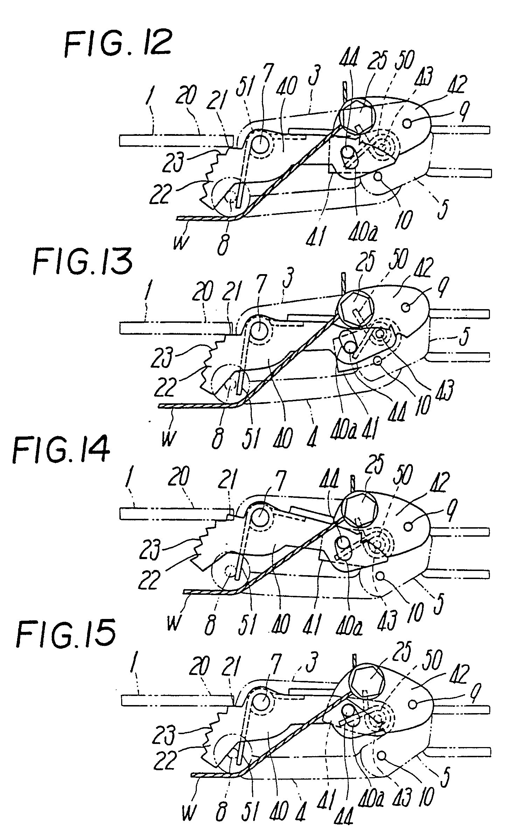

Fig. 10 a bottom view of the control arm of the second derailleur,

Fig. 11 a side view thereof, and

Figs. 12 to 15 being partially cut-away simplified bottom views of the second derailleur illustrating different operating conditions thereof; and

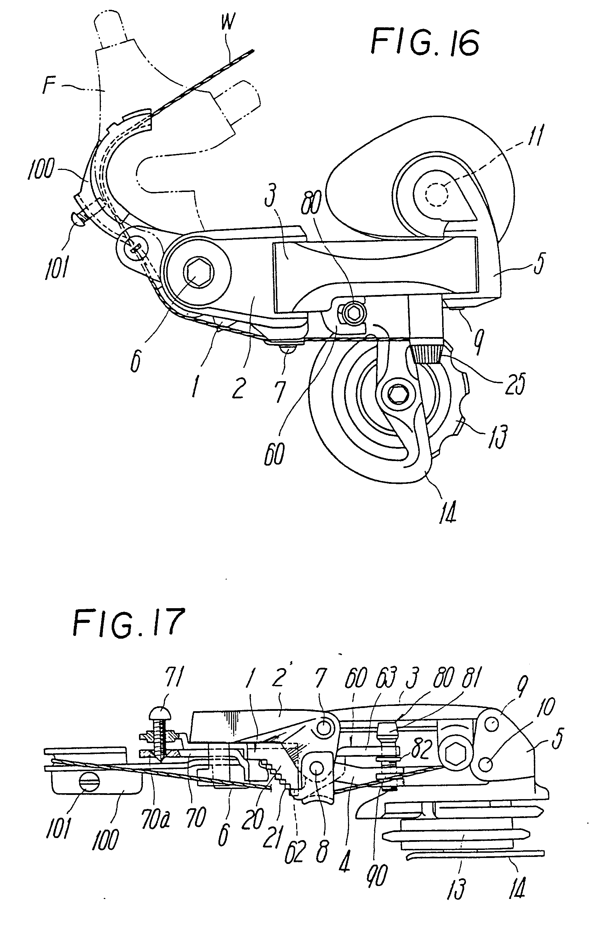

Figs. 16 to 22 show a third derailleur of the invention;

Fig. 16 being a front view thereof,

Fig. 17 a bottom view thereof,

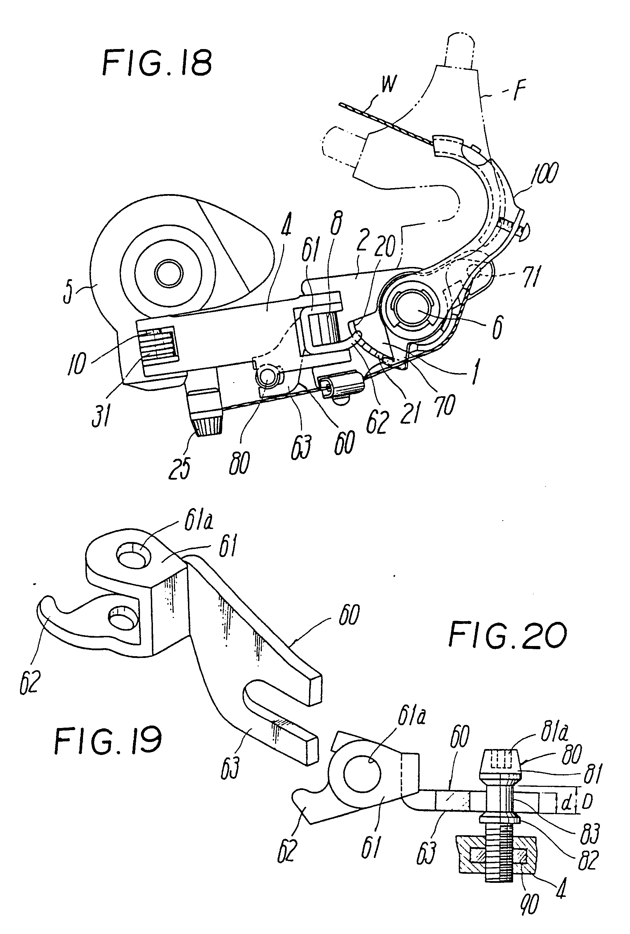

Fig. 18 a rear view thereof, but with the chain guide removed,

Fig. 19 an enlarged perspective view of the positioning member, alone, thereof,

Fig. 20 being a detail exploded view, illustrating the relationship between the positioning member and the adjusting member of the third derailleur,

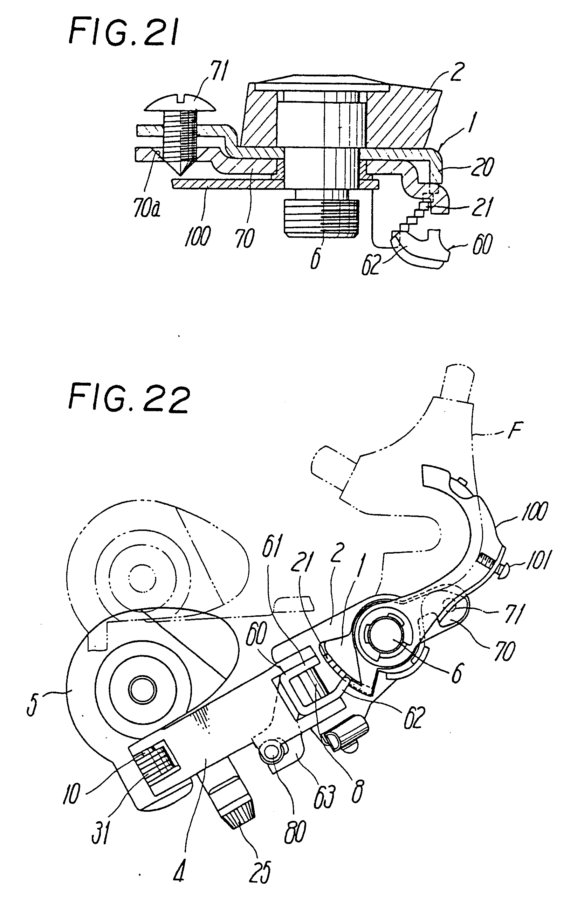

Fig. 21 a partially enlarged sectional view of the intermittent feed mechanism, alone, of the third derailleur, and

Fig. 22 a rear view of the third derailleur in the operating condition shown in Fig. 18.

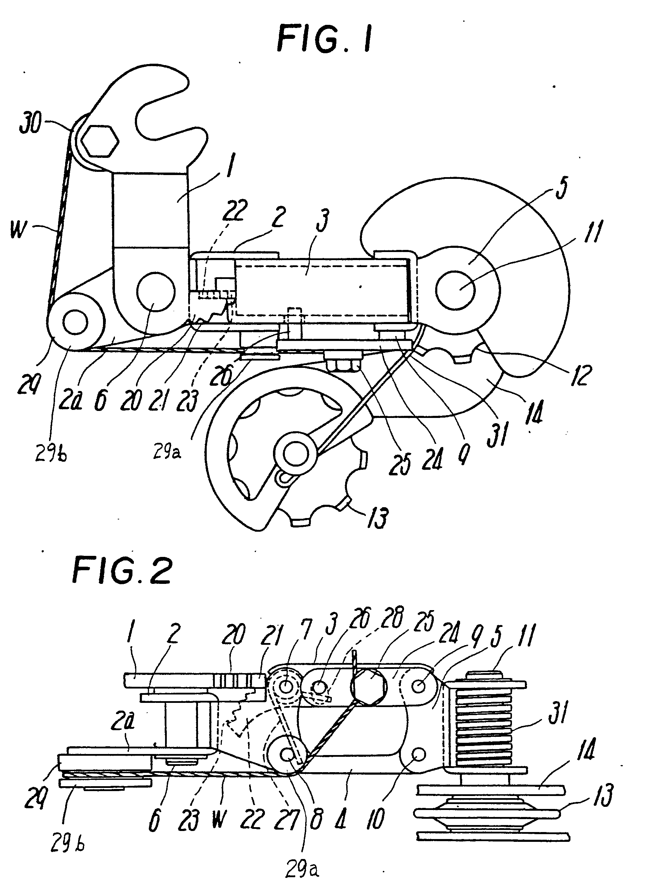

All the drawings show a rear derailleur for a cycle or parts thereof. The rear derailleur, as shown in Figs. 1 and 2, essentially comprises a fixing member 1 and a derailleur body comprising a four member parallelgram-type linkage with: a support member 2, two parallel link members 3, 4 pivotally connected to the support member 2, and a movable member 5, pivotally connected to the link members 3, 4 a return spring 27 being provided for biasing the movable member 5 unidirectionally with respect to the support member 2. The fixing member 1 is mounted, in use, on a hub shaft (not shown) in a fork end (not shown) of the cycle. The support member 2 is pivotally mounted on the fixing member 1 via a transverse shaft 6.

The support member 2 has at one side a pair of spaced apart mounting portions to which each of the link members 3, 4 is pivotally connected at one end via a respective pivot pin 7, 8. the opposite ends of the link member 3, 4 are pivotally connected to the movable member 5 via a pair of pivot pins 9, 10.

The movable member 5 is generally similar to the support member 2 having at one side a pair of spaced apart mounting poritions at which the link members 3, 4 are pivotally connected. At its other side is rotatably mounted, on a transverse shaft 11, for movement within a limited range, a chain shift means 14 having guide and tension pulleys 12, 13.

The pulleys 12, 13 carry a drive chain (not shown) and move axially of the multistage sprocket assembly (not shown) to guide the drive chain for switching thereof from one sprocket to another for changing gear.

The general type of derailleur construction described so far is well known and understood in the art.

The derailleur of the present invention does not, in contrast to previously known such derailleurs, have any spring disposed for acting between the fixing member 1 and the support member 2 so that the derailleur body is freely swingable with respect to the fixing member 1. There is though provided a step-wise feed mechanism, to be described in detail hereinbelow, provided for acting between the fixing member 1 and the derailleur body, so that a control wire W can be operated to swing the derailleur body relative to the fixing member 1 in a step-wise manner corresponding to the different speeds provided by the derailleur and rear-sprocket assembly, with a subsequent transformation of the derailleur.

The step-wise feed mechanism in the first embodiment shown in Figs. 1 to 7 is arranged for acting between the fixing member 1 and one of the link members 3. In detail, the fixing member 1 has an integrally formed extension 20 and the link member 3 has mounted thereon positioning member 22. The fixing member extension 20 extends toward the link member 3 and is provided with a plurality of first engagement portions 21. The positioning member 22 is mounted so as to extend towards the fixing member 1 and is provided with a plurality of second engagement portions 21 corresponding to the number of speed change stages provided by the derailleur and rear sprocket assembly and is engageable with the first engagement portions 21. A control arm 24 is supported on the pivot pin 9 connecting the movable member 5 and said link member 3 so as to be swingable independently of said link member 3. The control wire W is secured to the control arm 24 by a fixing means 25, and the abovementioned return spring 27 is mounted on the pivot pin 7 connecting said link member 3 to the support member 2 for acting between a pin 26 secured to the control arm 24 and the pivot pin 8 connecting the other link member 4 to the support member 2.

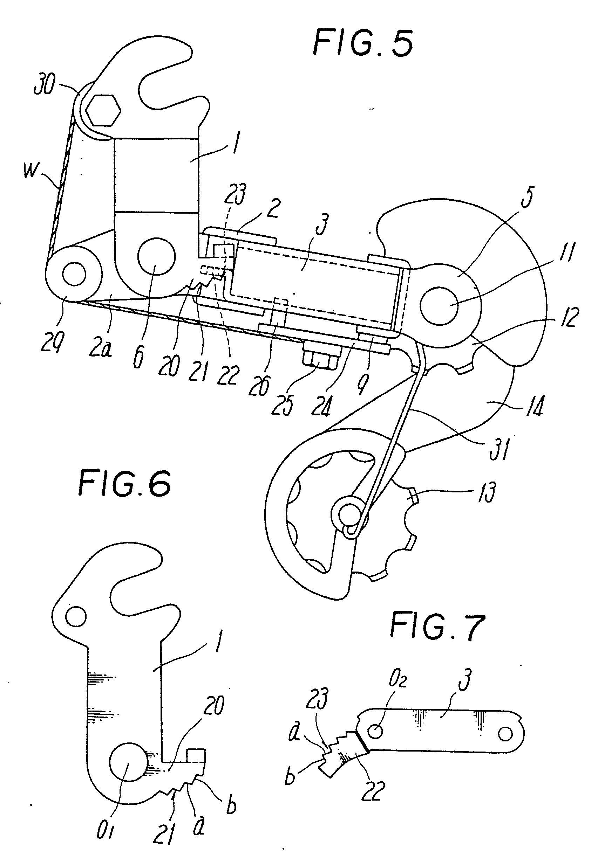

In greater detail, each of the first and second engagment portions 21, 23 has, as is shown in Figs. 6 and 7, stop faces *a* and slide faces *b*, the slide faces *b* of the first engagement portions 21 each being formed as a part-circular arc concentric with the axis $0_1$ of the transverse shaft 6, mounting the support member 2 on the fixing member 1, whilst the slide faces *b* of the second engagement portions 23 are each formed as a part-circular arc concentric with the axis $O_2$ of the pivot pin 7 connecting said link member 3 to the current support member 2.

In other words, the first engagement portions 21 extend generally in the direction of swinging movement of the derailleur body relative to the fixing member 1, and engage the second engagment portions 23 of the positioning member 22 to locate the derailleur body at predetermined positions relative to the fixing member 1. The second engagement portions 23 are disposed in stepwise manner extending generally in the direction of displacement of the chain shift means 14 caused by transformation of the parallelogram link mechanism by the control wire *W*, to locate the chain shift means 14 at predetermined positions relative to the support member 2.

The abovementioned link member 3 has an elongate slot 28 through which the pin 26 secured to the control arm 24 extends. The return spring 27 is wound around the pin 7 with one end abutting the pin 8 and its other end the pin 26 for acting therebetween as previously mentioned.

The control wire *W* extends from the control arm 24 around a first guide means 29 on the support member 2 and a second guide means 30 on the fixing member 1 to a gear control level (not shown). Both the guide means 29 and 30 are in the form of guide rollers. The first guide means 29 comprises a first guide roller 29*a* rotatably mounted on the pivot-pin 8 connecting the support member 2 to the link member 4 which is remote from the wire fixing means 25 and a second guide roller 29*b* mounted rotatably on an arm 2*a* which extends from the side of the support member 2 opposite to that from which the link members 3 and 4 extend radially outwardly of the transverse shaft 6 so that the second guide roller 29*b* is disposed in a plane at rightangles to that of the first guide roller 29*a*. In this case, a straight line connecting the first guide means 29 and the control wire fixing means 25 (as viewed in Fig. 1) extends below the axis of the transverse shaft 6, i.e. below the centre of swinging movement of the derailleur body relative to the fixing member 1.

The second guide means roller 30 is rotatably mounted on an upper portion of the fixing member 1, so that when the control wire *W* is pulled, the link mechanism is subjected to a clockwise rotation around the transverse shaft 6 as the end of the control wire *W* secured by the fixing means 25 is pulled on.

In addition, Figs. 1 to 5 show a tension spring 31 provided for tensioning the drive chain through the chain shift means 14 tension pulley 13 and biasing the link mechanism counterclockwise around the transverse shaft 6.

The mode of operation of the abovedescribed derailleur will now be described.

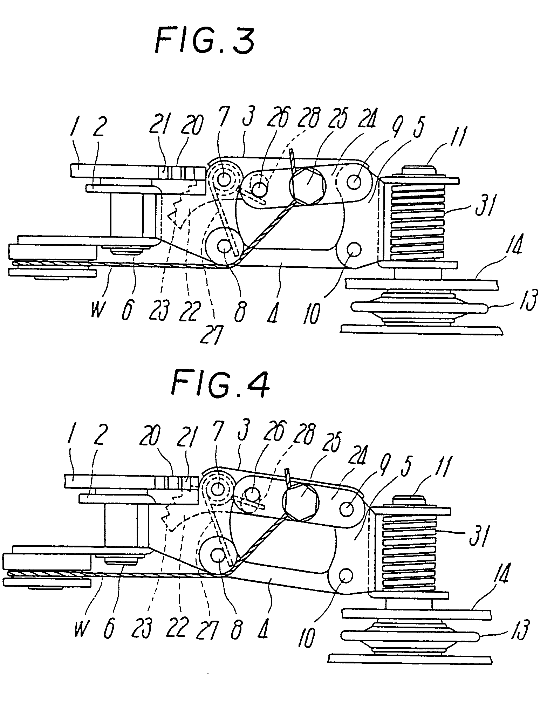

In Figs. 1 and 2, the chain shift means 14 is in a position corresponding to engagement of the drive chain with the smallest diameter i.e. high speed sprocket, (in the so-called top gear). When the control wire *W* is pulled through a given distance corresponding to a single speed change from the high speed sprocket to an adjacent medium speed sprocket, the control arm 24 swings counterclockwise until the pin 26 abuts against the end of said slot 28 as shown in Fig. 3. The extent of pivotal movement of the control arm 24 (permitted by the length of the slot in this way) corresponds to the control wire displacement required for a single speed change. As this pivotal movement of the control arm 24 occurs, the return spring 27 is resiliently deformed and stores energy.

When the control wire *W* is then pulled still further with the pin 26 now abutting the end of the slot 28, the derailleur body is swung around the transverse shaft 6 relative to the fixing member 1, thereby shifting the chain shift means 14 radially of the multistage sprocket assembly.

In this case a slide face *b* of one of the second engagement portions 23 of the positioning member 22 slides along a slide face *b* of one of the first engagement portions 21 on the extension 20 of the fixing member 1, following the pivotal movement of the derailleur body. As a result, a stop face *a* of one of the second engagement portions 23 is displaced away from an abutting stop face *a* of one of the first engagment portions 21, thus permitting the parallelogram linkage mechanism to be transformed.

The energy stored in the return spring 27 is now able to transform the parallelogram linkage mechanism as shown in Fig. 4, so that the chain shift means 14 moves axially of the multistage sprocket assembly to switch the chain to said adjacent medium speed sprocket. In addition, the axial movement of the chain shift means 14 allows the second engagement portions 23 to engage with its next stop face *a*, the next stop face *a* of the first engagement portions 21.

As will be apparent from the above, the chain shift means 14 moves first radially of the multistage sprockets and then axially thereof, thereby travelling along a longer path with greater separation between the guide pulley 12 and the sprocket about to be engaged with the drive chain, thereby resulting in a freer movement. When the drive chain is switched under such conditions of increased freedom of movement lateral pressure between the chain shift means, drive chain, and the sprocket is substantially reduced thereby resulting in a lighter operation of the control wire i.e. requiring less effort on the control lever.

In addition the abovedescribed embodiment can use the energy stored in the spring 27 to positively and quickly displace the chain shift means 14 axially of the multistage sprocket assembly, so that the problems of generating noise and excessive wear in the drive chain and sprocket due to slow displacement of the chain shift means 14 are also eliminated at the same time irrespective of the operating speed of the control wire W by a rider.

On the other hand, when the drive chain is returned to the high speed sprocket from the medium speed sprocket, the control wire W is released so as to first transform the link mechanism under the influence of the return spring 27.

In this case the link members 3 and 4 are freely swingable counterclockwise (as viewed in Fig. 4) due to the fact that each slide face b of the second engagement portions 23 is formed as a part-circular arc centred around the axis of the pivot pin 7 as shown in Fig. 7, thereby permitting transformation of the parallelogram linkage mechanism.

The linkage mechanism is transformed to disengage the second engagement portions 23 from the first engagement portions 21, whereby the tension spring 31 functions to swing the derailleur body counterclockwise around the transverse shaft 6, thus switching the chain back to the high speed sprocket, at wich stage the next stop face a (corresponding to the high speed derailleur condition) of the second engagement portions 23 engages the next stop face a (corresponing to the high speed derailleur condition) of the first engagement portions 21.

Various modifications may be made to the above design without departing from the scope of the present invention. Thus, instead of being located as shown above, the positioning member 22 could be formed integrally with the other link member 4 or the movable member 5.

The control arm 24, which is advantageous as mentioned above, need not be provided particularly. Also the return spring 27 may be provided separately from an energy conserving spring.

Furthermore where a Bowden cable is used, a holder for the outer sheath of the control wire W could be provided on the fixing member 1 in the vicinity of the guide mounting portion thereof or on the support member 2, so that said holder can act relative to the wire.

In addition the step-wise feed mechanism of the above embodiment, which functions only when the chain shift means moves from the high speed sprocket to the low speed one, could be arranged to function reciprocably of the chain shift means 14 as shown in Figs. 8 to 15 with reference to the second embodiment.

In Figs. 8 to 15, a derailleur is provided with a positioning member 40, an energy storage arm 41 and a control wire arm 42, separate from the parallelogram linkage mechanism. The positioning member 40 is pivotally mounted on the pivot pin 7 connecting a link member 3 to the support member 2 and has second engagement portions 23, an elongate slot 40a and a pin bore 40b. The energy storage arm 41 is pivotally mounted on a pin 43 which extends through the pin bore 40b, and the wire arm 42 is pivotally mounted on the pivot pin 9 connnecting the movable member 5 to said link member 3 and carries the fixing means 25 for the control wire W. An interlocking pin 44 projects from the energy storage arm 41 and extends through the slot 40a to engage in the control wire arm 42. An energy storage spring 50 is disposed for acting between the positioning member 40 and the energy storage arm 41, as well as a return spring 51 for acting between the positioning member 40 and the support member 2, and in turn the pivot pin 8 connecting the other link member 4 to the support member 2, and an auxiliary spring 52 for acting between the linkage member 4 and the support member 2, and in turn the pivot pin 7 connecting the first-mentioned link member 3 to the support member 2.

For convenience, like parts in the first and second embodiments of Figs. 1 to 7 and Figs. 8 to 15, respectively, are indicated by like reference numerals.

In the second derailleur, the tension spring is not shown in Figs. 8 to 15, this being housed inside a tubular shaft 5a provided on the movable member 5 and wound around a transverse shaft 11 extending through said tubular shaft 5a to be engaged at one end therewith whilst being engaged at its other end with the transverse shaft 11.

If the spring force of the tension spring is designated $F_1$, that of the energy storage spring 50 $F_2$, that of the return spring 51 $F_3$, and that of an auxiliary spring 52 $F_4$, then these springs should have a spring force relationship as follows: $F_1 > F_2 > F_3 > F_4$.

The positioning member 40, as shown in Figs. 10 and 11, is formed at an intermediate portion as a generally U-shaped channel in section and has a pair of opposed plates 40c and 40d. One plate 40d is staggered inwardly towards one end which constitutes the positioning member 22 and is provided with the second engagement portions 23. An end face 40e of the staggered portion engages with the end face of the link member 3 to limit the angle of pivotal movement of the positioning member 40. Each slide face b of the second engagement portions 23 of the positioning member 40 is formed as a part-circular arc concentric with the axis of the pivot pin 7 connecting said link member 3 to the support member 2.

The mode of operation of the second derailleur will now be described.

The chain shift means 14 is shown in Figs. 8 and 12 is in the top gear position—as in the case of Fig. 2. When the control wire W is pulled in this condition, the control wire arm 42 interlocked together with the energy storage arm 41 by the interlocking pin 44, swing counterclockwise as shown in Fig. 13, the interlocking pin 44 allowing the energy storage spring 50 to resiliently deform to store energy and abutting against the end of the elongate slot 40a. Thus, the energy storage and control wire arms 41, 42 end the swinging movement thereof required to complete the control wire displacement corresponding to a single speed change stage. When the control wire W is then further pulled so that the length of control wire W between the wire fixing means 25 and the first guide 29 is actually reduced, the derailleur body swings around the transverse shaft 6 relative to the fixing member 1 as in the first derailleur, thereby displacing the chain shift means 14 radially of the multistage sprocket assembly.

The above pivotal movement of the derailleur body disengages the second engagement portions 23 from the first engagement portions 21, and the energy stored in the energy storage spring 55 then quickly transforms the parallelogram linkage of the derailleur body to move the chain shift means 14 axially of the multistage sprocket assembly in similar manner as in the case of the first derailleur. The new condition of the derailleur body following transformation is as shown in Fig. 14.

When the chain shift means 14 is required to be returned to its top speed position as shown in Figs. 8 and 12, the control wire W is actuated to allow the return spring 51 to swing the control wire arm 14 clockwise (as viewed in Fig. 14) and allow the positioning member 40 to swing counterclockwise (as viewed in Fig. 14) so that the derailleur body assumes a condition as shown in Fig. 15.

At this stage, the link members 3 and 4 are free, but the auxiliary spring 52 acts on the link member 4 to hold the linkage members 3 and 4 stationary.

The positioning member 40 now swings to disengage the second engagement portions 23 from the first engagement portions 21, so that the tension spring acts to swing the derailleur body counterclockwise around the transverse shaft 6 relative to the fixing member 1, and, at first, the chain shift means 14 moves radially of the multistage sprocket assembly.

After the derailleur body has completed its swinging movement, the return spring 51 functions to transform the parallelogram linkage as shown in Fig. 15, so that the chain shift means 14 is displaced axially relative to the multistage sprocket assembly.

As will be apparent from the above, in the case of the second derailleur, the derailleur body can be swung in step-wise manner in correspondence with the different speed change stages of the derailleur, relative to the fixing member 1 in the case of both forward and return movement of the chain shift means 14.

If desired, the positioning members 22 and 40 of the above derailleurs could instead have the form used in the third derailleur as shown in Fig. 19.

The positioning member 60 shown in Fig. 19 is formed separately from the derailleur body and comprises a generally U-shaped body 61, an engagement nose 62 extending from one limb of said body 61 towards the first engagement portions 21 of the fixing member 1, and a fork 63 extending from the base of the U-shaped body at a free side edge of the body 61, towards the movable member 5. The pivot pin 8 connecting one link member 4 to the support member 2 extends, as shown in Figs. 17 and 18, through bores 61a in the two limbs of the body 61, to pivotally support the positioning member 60 on the link member 4.

At one end of the fixing member 1, at the link members 3, 4 side, is provided an arcuate flange 20 which extends axially of the transverse shaft 6 and generally around one side of the shaft 6, the flange 20 having a free edge opposite its edge connecting it to the fixing member, which free edge extends obliquely relative to the connecting edge (see Fig. 17), said obliquely extending free edge being stepped to provide the first engagement portions 21.

In other words, the first engagement portions 21 are arranged to extend generally in the direction of swinging of the derailleur body relative to the fixing member 1 and are displaced relative to each other in the general direction of displacement of the chain shift means 14 by the transformation of the parallelogram linkage.

The height of each step constituting a first engagement portion 21 limits the magnitude of the displacement of the chain shift means 14 relative to the support member 2 and, in turn, the magnitude of the axial displacement relative to the multistae sprocket assembly. The distance between each step limits the magnitude of displacement of the derailleur body relative to the fixing member 1 and, in turn, the magnitude of the displacement of the chain shift means 14 radially of the multistage sprocket assembly.

In the third derailleur shown in Figs 16 to 22, seven first engagement portions 21 are provided. A control member 70, which moves in the same general direction in which the first engagement portions 21 extend and controls the engagement and disengagement thereof, is pivotally connected to the fixing member 1 by said transverse shaft 6. The control member 70, as shown in Fig. 21, has a tapered bore 70a and the fixing member 1 has an adjusting screw 71 screw threadedly engaged therewith. The adjusting screw 71 has at its tip a tapered engagement portion which locates in the tapered bore 70a. On screwing the adjusting screw 71 in or out it swings the control member 70, so that one or two first engagement portions 21 at the outside end of the series of first engagement portions 21 is controlled in engagement or disengagement.

In addition an adjustment screw 80, as shown in Figs. 17 and 20, is screw threadedly engaged with the link member 4 and has at a head portion a pair of opposed annular flanges 81 and 82 on either side of an annular groove 83. This annular groove 83 engages in the fork 63 of the positioning member 60, thereby retaining the positioning member 60 in position relative to said link member 4. In this condition, the engagement nose 62 of the positioning member 60 engages the first engagement portions 21, thereby positioning the chain guide 14 with respect to the respective sprockets of the multistage sprocket assembly.

In the above construction, the position of the positioning member 60 is adjustable relative to the link member 4 by screwing in or out of the adjustment screw 80, thereby adjusting the position of the chain shift means 14 axially of the sprocket assembly, the axial position being determined by the engagement of the engagement nose 62 with respective first engagement portions 21.

The link member 4, as shown in Fig. 18, projects laterally from one side the adjustement screw 80 being screw threadedly secured to the projection by means of a synthetic resin locking washer 90 as shown in Figs. 17 and 20. The upper flange 81 of the adjustment screw 80 has in its top a square recess 81a for engagement by a suitable tool to screw the adjustment screw 80 in or out. The opposed faces of the flanges 81 and 82 are frusto-conical and the radially outer surfaces of the latter are cylindrical.

The spacing $D$ between the opposed faces of the flanges 81 and 82 may either be equal to the thickness $d$ of the fork 63 of the positioning member 60 engaging therewith or conveniently may be larger than said thickness $d$, so that the link member 4 connected thereby to the positioning member 60 is swingable relative to the link member 4 through a distance equal to the difference between the spacing $D$ and the thickness $d$ even when the engagement nose 62 of the positioning member 60 is engaged with a first engagement portion 21 for positioning of the link member 4.

In other words, when the engagement nose 62 engages the first engagement portions 21, the link member 4 is biased towards the top position (as viewed in the drawings) by the return spring, whereby the positioning member 60 resiliently abuts against the lower flange 82. In this condition, when the control wire $W$ is pulled to move the chain shift means 14 to the low speed side, the link member 4 at first swings through a limited distance until the upper flange 81 at the top of the head of the adjustment screw 80 contacts the positioning member 60. Therefter, the engagement nose 62 disengages from the first engagement portions 21, so that the link member 4 moves by an amount determined by the height of each step between successive first engagement portions 21.

The link member 4, even when restricted in its position by engagement of the positioning member 60 with the first engagment portions 21, is able to move during an initial pull of the control wire $W$ as indicated above. Hence, the other link member 3 also swings, so that the chain shift means 14 can be moved axially of the multistage sprocket assembly within a limited range determined by the abovementioned difference between $D$ and $d$.

Accordingly, every time the control wire $W$ is pulled, the chain shift means 14 is over-shifted beyond the set distance, thereby ensuring a switching of the drive chain by the chain shift means 14.

As will be apparent from the above, it is preferable that the abovementioned range of possible free swinging movement of the link member 4 is made to coincide with a suitable predetermined degree of over-shift.

The third derailleur illustrated in Figs. 16 to 22 uses a control wire guide 100 having an extended arcuate guide surface instead of the relatively short pulley-like guides 29 and 30 of the first and second derailleurs. The guide 100 is mounted on the fixing member 1 so as to be movable in the direction of adjustment of the tension in the control wire $W$, and has an adjustment means 101 for adjusting the position of the guide 100 relative to the fixing member 1, so that the control wire $W$ is led round to the control wire fixing means 25 via the adjustment means 101 and can be readily adjusted as to its tension.

The adjustement means 101, as shown in the drawings, is disposed on the outside with respect to a rear fork end $F$ of the cycle on which the derailleur is mounted in use.

The derailleur shown in Figs. 16 to 22, switches the chain in essentially the same manner as with the first and second derailleurs, the control wire $W$ being operated to first swing the derailleur body relative to the fixing member 1 and then transform the parallelogram linkage of the derailleur. Also, the adjustment 80 can be operated to adjust the position of the positioning member 60, thereby facilitating adjustment of the chain shift means 14 position axially of the multistage sprocket assembly, thereby further ensuring correct switching of the drive chain to a desired sprocket.

Also, the adjustment screw 71 adjusts the position of the control member 70 relative to the first engagement portions 21, thereby making it possible to control, in a simple manner, the number of sprockets to be used with the derailleur for gear changing thereby broadening the range of applications of the derailleur and enabling its use with different numbers of gear change stages.

**Claims**

1. A derailleur for use with a multi-stage sprocket assembly of a cycle, said derailleur comprising; a fixing member (1) and a derailleur body having a parallelogram linkage comprising a support member (2), a pair of link members (3, 4) each pivotally connected at one end (7, 8) to said support member (2) and at its other end (9, 10), to a movable member (5), said movable member mounting a chain shift means (14), and said derailleur body including a return spring (27) arranged for biasing said movable member (5) unidirectionally relative to said support member (2), said derailleur body being pivotally mounted (6) on said fixing member (1) via said support member (2), said chain shift means (14) of said derailleur body being pivotally movable relative to said movable member (15), said movable member (5) and chain shift means (14) having a tension spring (31) disposed for acting therebetween and biasing said derailleur body counterclockwise relative to said fixing member (1), one of the members (3 to 5) of the derailleur body which member is movable relative to the support member (2) being provided with a control wire fixing means (25) for securing a control wire (W) thereto, in use of the derailleur, so that displacement thereof will transform the parallelogram linkage against the biasing force of said return spring (27) and swing said derailleur body relative to said fixing member (1) against the biasing force of said tension spring (31), and wherein is provided a step-wise feed means (21, 23) characterized in that said step-wise feed means (21, 23) is disposed for acting between said fixing member (1) and said derailleur body (2—5), said control wire fixing means (25, 29, 30) and said feed means (21, 23) being formed and arranged so as to rotate said derailleur body, upon displacement of the control wire (W), generally parallel to the plane of the chain shift means (14) step-wise in correspondence with speed changes between different sprockets of said multi-stage sprocket assembly, relative to said fixing member (1) and to subsequently transform said derailleur body, when changing from one speed to another corresponding to shifting of the drive chain from a higher speed sprocket to a lower speed sprocket of the multi-stage sprocket assembly in use of the derailleur, whereby in use of the derailleur the chain shift means is displaced radially outwardly of a smaller diameter sprocket of a multi-stage sprocket prior to being laterally displaced to a larger diameter sprocket thereof, and in that said step-wise feed means comprises a plurality of first engagement portions (21) whose number corresponds to or exceeds the number of desired speed change stages to be provided by the derailleur in use thereof with said multi-stage sprocket assembly, and a postioning means (22) which has at least one second engagement portion (23) engageable with one of said first engagement portions (21) for locating said derailleur body in a predetermined position relative to said fixing member (1), said first engagement portions (21) extending along the swinging direction of said derailleur body (2—5) relative to said fixing member (1) and being laterally displaced relative to each other in the same direction as rotational displacement of said chain shift means (14) caused by transformation of the parallelogram linkage of said derailleur body.

2. A derailleur according to claim 1 wherein said step-wise feed means (21, 23) is provided with a control member (24) formed and arranged for moving in the same general direction in which said first engagement portions (21) extend for controlling engagement and/or disengement of said first engagement portions (21) by said at least one second engagement portion (23).

3. A derailleur according to claim 2, wherein said control member (24) includes an adjusting mechanism for adjusting a control position of said control member (24) relative to said first engagement portions (21).

4. A derailleur according to any one of claims 1 to 3, wherein said plurality of first engagement portions (21) of said step-wise feed means is provided on said fixing member (1) and wherein said positioning means (22) is provided on one of said link members (3) of said derailleur body.

5. A derailleur according to Claim 4, wherein said positioning means (22) is formed integrally with one of said link members (3) of said derailleur body.

6. A derailleur according to Claim 4, wherein said positioning means is in the form of a discrete positioning member (22) connected to one of said link members (3).

7. A derailleur according to Claim 6, wherein said positioning member (22) is connected to said link member (33) so as to be movable relative thereto, one of said link members (3, 4) having an adjuster for positionally adjusting said positioning member (22) relative to said link member (3, 4).

8. A derailleur according to Claim 7, wherein said positioning member (60) has a fork (63), said adjuster comprises a screw (80) having at its head (81) an annular groove (83) engageable in said fork (63).

9. A derailleur according to any one of Claims 1 to 8, in which said derailleur body has a control member (24) pivotally connected to a member (3) of the derailleur body movable relative to the support member (2), wherein said control wire fixing means (25) is provided on said control member (24) and wherein the energy storage spring (27) is disposed for acting between said support member (2) and said control member (24).

10). A derailleur according to any one of Claims 1 to 8 in which the derailleur body pivotally mounts a positioning member (40) which is movable independently relative to each of the members (2 to 5) constituting the parallelogram linkage of the derailleur body and in which the derailleur body also supports a control wire member (42) on which is provided the control wire fixing means (25) wherein is provided an energy storage spring (27) disposed for acting between said positioning member (40) and said control wire member (42) and wherein the return spring (31) disposed for acting between said positioning member (40) and said derailleur body.

11. A derailleur according to any one of Claims 1 to 10 wherein the support member (2) of the derailleur body is provided with a guide (29) for the control wire (W) disposed so that a straight line connecting said guide (29) and the control wire fixing means (25) extends below the center of pivotal movement of the derailleur body (2 to 5) relative to said fixing member (1).

12. A derailleur for a cycle according to Claim 11, wherein the fixing member (1) is provided with a control wire guide (30).

13. A derailleur for a cycle according to Claim 12, wherein said guide on said fixing member (1) has an arcuate guide surface (100) and is movably mounted on said fixing member (1) for positionally adjusting said guide surface (100) relative to said fixing member (1) so as to adjust the tension in the control wire (W).

## Patentansprüche

1. Gangschaltung für eine mehrstufige Zahnradanordnung eines Fahrrades mit:

einem Halteteil (1) und einem Schaltungskörper, der eine Parallelogrammverbindung, bestehend aus einem Stützteil (2), einem Paar von Verbindungsteilen (3, 4), von denen jedes schwenkbeweglich an einem Ende (7, 8) mit dem Stützteil (2) und mit seinem anderen Ende (9, 10) mit einem beweglichen Bauteil (5) verbunden ist, aufweist, wobei das bewegliche Bauteil eine Kettenschiebeeinrichtung (14) trägt, und wobei:

der Schaltungskörper eine Rückstellfeder (27) aufweiste, die vorgesehen ist, um das bewegliche Bauteil (5) in einer Richtung relativ zu dem Stützteil (2) vorzuspannen, der Schaltungskörper schwenkbeweglich an dem Halteteil (1) über das Stützteil (2) befestigt ist (6), die Kettenschiebeeinrichtung (14) des Schaltungskörpers schwenkbeweglich relative zu dem beweglichen Bauteil (5) ist, das bewegliche Bauteil (5) und die Kettenschiebeeinrichtung (14) eine Zugfeder (31) aufweisen, die für eine Kraftentwicklung zwischen diesen Teilen vorgesehen ist und den Schaltungskörper entgegen Uhrzeigersinn relativ zu dem Halteteil (1) vorspannt, eines der Bauteile (3—5) des Schaltungskörpers, wobei dieses Bauteil relativ zu dem Stützteil (2) beweglich ist, mit einer Schaltdraht-Halteeinrichtung (25) ausgerüstet ist, um einen Schaltdraht (W) beim Betrieb der Gangschaltung daran zu befestigen, so daß eine Versetzung hiervon die Parallelogrammverbindung entgegen der Vorspannkraft der Rückstellfeder (27) versetzt und den Schaltungskörper relativ zu dem Halteteil (1) entgegen der Vorspannkraft der Zugfedet (31) schwenkt, und wobei eine stufenweise wirkende Stelleinrichtung (21, 23) vorgesehen ist,

dadurch gekennzeichnet, daß

die stufenweise wirkende Stelleinrichtung (21, 23) derart angeordnet ist, daß sie zwischen dem Halteteil (1) und dem Schaltungskörper (2—5) wirkt, die Schaldraht-Halteeinrichtung (25, 29, 30) und die Stelleinrichtung (21, 23) derart ausgebildet und angeordnet sind, daß sie den Schaltungskörper bei einer Verschiebung des Schaltdrahtes (W) im wesentlichen parallel zur Ebene der Kettenschiebeeinrichtung (14) stufenweise verschieben, übereinstimmend mit Geschwindigkeitsänderungen zwischen verschiedenen Zahnrädern der mehrstufigen Zahnradanordnung relativ zu dem Halteteil (1) und zum nachfolgenden Versetzen des Schaltungskörpers, wenn von einer Geschwindigkeit zu einer anderen geschaltet wird entsprechend einer Verschiebung der Antriebskette von einem Zahnrad für höhere Geschwindigeit zu einem Zahnrad mit niedrigerer Geschwindigkeit der mehrstufigen Zahnradanordnungen bei Verwendung der Gangschaltung, wobei bei Verwendung der Gangschaltung die Kettenschiebeeinrichtung radial nach außen von einem Zahnrad mit kleinem Durchmesser eines Mehrstufenzahnrades vor einer lateralen Versetzung zu einem Zahnrad mit größerem Durchmesser hiervon verschoben wird, und daß die stufenweise wirkende Stelleinrichtung eine Mehrzahl von ersten Eingriffsteilen (21) aufweist, deren Anzahl der Anzahl der gewünschten Geschwindigkeitsänderungsstufen, die von der Gangschaltung bei deren Verwendung mit einer mehrstufigen Zahnradanordnung erzeugt werden, entspricht oder übersteigt und eine Positionierungseinrichtung (22) aufweist, welche wenigstens ein zweites Eingriffsteil (23) aufweist, das mit einem der ersten Eingriffsteile (21) in Eingriff bringbar ist, um den Schaltungskörper in einer festgelegten Position relativ zu dem Halteteil (1) anzuordnen, wobei die ersten Eingriffsteile (21) sich entlang der Schwingrichtung des Schaltungskörpers (2—5) relativ zu dem Halteteil (1) erstrecken und relativ zueinander in der gleichen Richtung lateral versetzt sind wie die Drehversetzung der Kettenschiebeeinrichtung (14), welche durch eine Verschiebung der Parallelogrammverbindung des Schaltungskörpers verursacht wird.

2. Gangschaltung nach Anspruch 1, wobei die stufenweise wirkende Stelleinrichtung (21, 23) ein Steuerteil (24) aufweist, das ausgebildet und angeordnet ist, un sich im wesentlichen in die gleiche Richtung zu bewegen, in welche sich die ersten Eingriffsteile (21) erstrecken, um einen Eingriff und/oder ein Lösen der ersten Eingriffsteile (21) mit dem wenigstens einen zweiten Eingriffsteil (23) zu steuern.

3. Gangschaltung nach Anspruch 2, wobei das Steuerteil (24) einen Einstellmechanismus aufweist, um eine Steuerlage des Steuerteils (24) relative zu den ersten Eingriffsteilen (21) einzustellen.

4. Gangschaltung nach einem der Ansprüche 1 bis 3, wobei die mehrzahl der ersten Eingriffsteile (21) der stufenweise wirkenden Stelleinrichtung an dem Halteteil (1) angeordnet ist und wobei die Positionierungseinrichtung (22) auf einem der Verbindungsteile (3) des Schaltungskörpers angeordnet ist.

5. Gangschaltung nach Anspruch 4, wobei die Positionierungseinrichtung (22) einstückig mit einem der Verbindungsteile (3) des Schaltungskörpers ausgebildet ist.

6. Gangschaltung nach Anspruch 5, wobei die Positionierungseinrichtung in Form eines diskreten Positionierungsteils (22) vorliegt, welches mit einem der Verbindungsteile (3) verbunden ist.

7. Gangschaltung nach Anspruch 6, wobei das Positionierungsteil mit dem Verbindungsteil (3) verbunden ist, um relative hierzu beweglich zu sein, wobei eines der Verbindungsteile (3, 4) eine Justiervorrichtung aufweist, um das Positionierungsteil (22) relativ zu den Verbindungsteilen (3, 4) lagezujustieren.

8. Gangschaltung nach Anspruch 7, wobei das Positionierungsteil (60) eine Gabel (63) aufweiste und der Justierer eine Schraube (80) aufweiste, welche an ihrem Kopf (81) eine ringförmig umlaufende Kerbe (83) aufweist, welche mit der Gabel (63) in Anlage bringbar ist.

9. Gangschaltung nach einem der Ansprüche 1 bis 8, wobei der Schaltungskörper ein Steuerteil (24) aufweist, welches schwenkbeweglich mit einem Verbindungsteil (3) des Schaltungskörpers verbunden und relativ zu dem Stützteil (2) beweglich ist, wobei die Schaltdraht-Halteeinrichtung (25) an dem Steuerteil (24) angeordnet ist und wobei die Energiespeicherfeder (27) derart angeordnet ist, daß sie zwischen dem Stützteil (2) und dem Steuerteil (24) wirkt.

10. Gangschaltung nach einem der Ansprüche 1 bis 8, wobei der Schaltungskörper ein Positionierungsteil (40) Schwenkbeweglich trägt, welches unabhängig relativ zu jedem der Teile (2—5), welche die Parallelogrammverbindung des Schaltungskörpers bilden, beweglich ist, und wobei der Schaltungskörper weiterhin ein Schaltdrahtteil (42) trägt, an welchem die Schaltdraht-Halteeinrichtung (25) angeordnet ist, wobei eine Energiespeicherfeder (27) vorgesehen ist, welche zwischen dem Positionierungsteil (40) und dem Schaltdrahtteil (42) wirkt und wobei die Rückstellfeder (31) vorgesehen ist, welche zwischen dem Positionierungsteil (40) und dem Schaltungskörper wirkt.

11. Gangschaltung nach einem der Ansprüche 1 bis 10, wobei das Stützteil (2) des Schaltungskörpers mit einer Führung (29) für den Schaltdraht (W) ausgerüstet ist, welche so angeordnet ist, daß eine gerade Linie, welche die Führung (29) und die Schaltdraht-Halteeinrichtung (25) verbindet unterhalb des Drehpunktes der Schwenkbewegung des Schaltungskörpers (2—5) relativ zu dem Halteteil (1) verläuft.

12. Gangschaltung für eine Fahrrad, nach Anspruch 11, wobei das Halteteil (1) mit einer Schaltdrahtführung (30) ausgerüstet ist.

13. Gangschaltung für eine Fahrrad, nach Anspruch 12, wobei die Führung an dem Halteteil (1) eine bogenförmig geschwungene Führungsoberfläche (100) aufweist und beweglich an dem Halteteil (1) befestigt ist, um die Führungsoberfläche (100) relativ zu dem Halteteil (1) lagezujustieren, so daß die Spannung des Schaltdrahtes (W) einstellbar ist.

**Revendications**

1. Dérailleur destiné à être utilisé avec un ensemble à pignons à étages multiples d'un cycle, ledit dérailleur comprenant: un élément de fixation (1) et un corps de dérailleur à timonerie en parallélogramme comportant un élément de support (2), deux éléments de liaison (3, 4) dont chacun est relié de façon pivotante à une extrémité (7, 8) dudit élément de support (2) et à son autre extrémité (9, 10) à un élément mobile (5), ledit élément mobile supportant un moyen de décalage de chaîne (14), et ledit corps de dérailleur comprenant un ressort de rappel (27) aménagé pour solliciter ledit élément mobile (5) de façon unidirectionnelle par rapport audit élément de support (2), ledit corps de dérailleur étant monté de façon pivotante (6) sur ledit élément de fixation (1) par ledit élément de support (2), ledit moyen de décalage de chaîne (14) dudit corps de dérailleur étant mobile de façon pivotante par rapport audit élément mobile (5), ledit élément mobile (5) et le moyen de décalage de chaîne (14) comportant un ressort de tension (31) disposé pour agir entre eux et sollicitant ledit corps de dérailleur dans le sens inverse des aiguilles d'une montre par rapport audit élément de fixation (1), l'un des éléments (3 à 5) dudit corps de dérailleur qui est mobile par rapport à l'élément de support (2) étant muni d'un moyen de fixation de câble de commande (25) pour y fixer un câble de commande (W), lors de l'utilisation du dérailleur, de manière que son déplacement transforme la timonerie en parallélogramme à l'encontre de la force de sollicitation dudit ressort de rappel (27) et fasse basculer ledit corps de dérailleur par rapport audit élément de fixation (1) à l'encontre de la foce de sollicitation dudit ressort de tension (31), et dans lequel est prévu un moyen d'alimentation en pas à pas (21, 23), caractérisé en ce que ledit moyen d'alimentation en pas à pas (21, 23) est disposé de manière à agir entre ledit élément de fixation (1) et ledit corps de dérailleur (2—5), ledit moyen de fixation de câble de commande (25, 29, 30) et ledit moyen d'alimentation (21, 23) étant constitués et aménagés en vue de faire tourner ledit corps du dérailleur, lors du déplacement du câble de commande (W), de façon généralement parallèle au plan du moyen de décalage de chaîne (14) en pas à pas et en correspondance de changements de vitesse entre différents pignons dudit ensemble à pignons à étages multiples, par rapport audit élément de fixation (1), et à transformer ensuite ledit corps de dérailleur, quand on passe d'une vitesse à une autre qui correspond au passage de la chaîne d'entraînement d'un pignon pour grande vitesse à un pignon pour vitesse plus basse de l'ensemble à pignons à étages multiples lorsqu'on utilise le dérailleur, ce grâce à quoi, quand on utilise le dérailleur, le moyen de décalage de chaîne est déplacé radialement vers l'extérieur d'un pignon de petit diamètre d'un pignon à étages multiples avant d'être déplacé latéralement vers un pignon de plus grand diamètre de cet ensemble, et en ce que ledit moyen d'alimentation en pas à pas comprend une pluralité de premières portions d'engagement (21) dont le nombre correspond à ou dépasse le nombre d'étages de changements de vitesse désirés à fournir par le dérailleur quand il est utilisé avec ledit ensemble à pignons à étages multiples, et un moyen de positionnement (22) qui comprend au moins une seconde portion d'engagement (23) pouvant coopérer avec l'une desdites premières portions d'engagement (21) pour positionner ledit corps du dérailleur dans une position prédéterminée par rapport audit élément de fixation (1), lesdites premières portions d'engagement (21) s'étendant le long de la direction de pivotement dudit corps de dérailleur (2—5) par rapport audit élément de fixation (1) et étant déplacées latéralement les unes par rapport aux autres dans la même direction que le déplacement en rotation dudit moyen de décalage de chaîne (14) provoqué par la transformation de la timonerie en parallélogramme dudit corps de dérailleur.

2. Dérailleur selon la revendication 1, dans lequel ledit moyen d'alimentation en pas à pas (21, 23) est muni d'un élément de commande (24) formé et aménagé pour se déplacer dans la même direction générale que celle dans laquelle s'étendent lesdites premières portions d'engagment (21) pour commander l'engagement et/ou le dégagement desdites premières portions d'engagement (21) de ladite au moins une seconde portion d'engagement (23).

3. Dérailleur selon la revendication 2, dans lequel ledit élément de commande (24) comprend un mécanisme d'ajustement pour ajuster une position de commande dudit élément de commande (24) par rapport auxdites premières portions d'engagement (21).

4. Dérailleur selon l'une quelconque des revendications 1 à 3, dans lequel ladite pluralité de premières portions d'engagement (21) dudit moyen d'alimentation en pas à pas est prévue sur ledit élément de fixation (1), et dans lequel ledit moyen de positionnement (22) est prévu sur l'un desdits éléments de liaison (3) dudit corps du dérailleur.

5. Dérailleur selon la revendication 4, dans lequel ledit moyen de positionnement (22) est formé d'un seul tenant avec l'un desdits éléments de liaison (3) dudit corps du dérailleur.

6. Dérailleur selon la revendication 4, dans lequel ledit moyen de positionnement a la forme d'un élement de positionnement particulier (22) relié à l'un desdits éléments de liaison (3).

7. Dérailleur selon la revendication 6, dans lequel ledit élément de positionnement (22) est relié audit élément de liaison (3) de manière à pouvoir se déplacer par rapport à lui, l'un desdits éléments de liaison (3, 4) comprenant un élément d'ajustage pour ajuster la position dudit élément de positionnement (22) par rapport auxdits éléments de liaison (3, 4).

8. Dérailleur selon la revendication 7, dans lequel ledit élément de positionnement (60) comprend une fourche (63), ledit dispositif d'ajustage comprend une vis (80) comportant sur sa tête (81) une gorge (83) pouvant s'engager dans ladite fourche (63).

9. Dérailleur selon l'une quelconque des revendications 1 à 8, dans lequel ledit corps du dérailleur comprend un élément de commande (24) relié de façon pivotante à un élément (3) du corps du dérailleur qui est mobile par rapport à l'élément de support (2), dans lequel ledit moyen de fixation (25) du câble de commande est prévu sur ledit élément de commande (24) et dans lequel ledit ressort d'emmagasinage d'énergie (27) est disposé de façon à agir entre ledit élément de support (2) et ledit élément de commande (24).

10. Dérailleur selon l'une quelconque des revendications 1 à 8, dans lequel le corps du dérailleur supporte de façon pivotante un élément de positionnement (40) qui est mobile indépendamment par rapport à chacun des éléments (2 à 5) constituant la timonerie en parallélogramme du corps du dérailleur et dans lequel le corps du dérailleur supporte également un élément (42) pour le câble de commande sur lequel est prévu le moyen de fixation (25) du câble de commande, dans lequel est prévu un ressort d'emmagasinage d'energie (27) disposé pour agir entre ledit élément de positionnement (40) et ledit élément (42) du câble de commande et dans lequel le ressort de rappel (31) est disposé pour agir entre ledit élément de positionnement (40) et ledit corps du dérailleur.

11. Dérailleur selon l'une quelconque des revendications 1 à 10, dans lequel l'élément de support (2) corps du dérailleur est muni d'un guide (29) pour le câble de commande (W) disposé de manière qu'une ligne droite reliant ledit guide (29) et le moyen de fixation (25) du câble de commande s'étende au-dessous du centre du mouvement de pivotement du corps (2 à 5) du dérailleur par rapport audit élément de fixation (1).

12. Dérailleur pour un cycle selon la revendication 11, dans lequel l'élément de fixation (1) est muni d'un guide (30) pour le câble de commande.

13. Dérailleur selon la revendication 12, dans lequel ledit guide monté sur ledit élément de fixation (1) présente une surface de guidage courbe (100) et est monté de façon mobile sur ledit élément de fixation (1) pour ajuster la position de ladite surface (100) du guide par rapport audit élément de fixation (1) de manière à ajuster la tension du câble de commande (W).

## FIG. 1

## FIG. 2

0 036 317

# FIG.3

# FIG.4

2

## FIG.5

## FIG.6

## FIG.7

0 036 317

FIG.8

FIG.9

FIG.10

FIG.11

4

## FIG. 12

## FIG. 13

## FIG. 14

## FIG. 15

**0 036 317**

FIG. 16

FIG. 17

FIG.18

FIG.19

FIG.20

FIG.21

FIG.22